# EUROPÄISCHE PATENTSCHRIFT

(11) **EP 3 313 590 B1**
(45) Veröffentlichungstag und Bekanntmachung des Hinweises auf die Patenterteilung: **23.08.2023**
(21) Anmeldenummer: 16735603.9
(22) Anmeldetag: 27.06.2016
(51) Int. Cl.: C08J 5/18, B09B 3/00, A23P 30/10, C08L 101/00, D21J 3/12, D21J 3/00

(54) **VERFAHREN ZUM HERSTELLEN EINES FLACHMATERIALS**
METHOD FOR PRODUCING A FLAT MATERIAL
PROCÉDÉ DE PRODUCTION D'UN MATÉRIAU PLAT

(30) Priorität: 29.06.2015 DE 102015008214
(43) Veröffentlichungstag der Anmeldung: 02.05.2018
(73) Patentinhaber: Owusu Boakye, Jessica, 24235 Laboe (DE)
(72) Erfinder: Owusu Boakye, Jessica, 24235 Laboe (DE)
(74) Vertreter: Onsagers AS
(86) Internationale Anmeldenummer: PCT/EP2016/064829
(87) Internationale Veröffentlichungsnummer: WO 2017/001326

(56) Entgegenhaltungen:
- CN-A- 101 736 657
- CN-A- 102 133 967
- US-A1- 2013 178 561

## Beschreibung

Die vorliegende Erfindung betrifft Verfahren zum Herstellen eines Flachmaterials aus einem natürlichen Abfallprodukt zum Beispiel für dekorative Oberflächen etwa in Fahrzeugen, für Wandverkleidungen, Bodenbeläge, Verpackungen, Dekoration, Bekleidung, Dämmung, als Verpackungs- oder Bastelmaterial, Papier- oder Lederersatz.

Fruchtschalen sind ein vielfach anfallendes natürliches Abfallprodukt zumeist ohne wesentlichen eigenen merkantilen Wert. Zum Beispiel Zitrusfruchtschalen fallen in großen Mengen beispielsweise bei der Saftherstellung an. Sie haben (wie zum Beispiel auch Kastanien) einen besonderen Aufbau unter anderem mit einem Bestandteil, der sich Mesokarp nennt: Die Färbung der drüsenreichen Außenschale von Zitrusfrüchten zunächst ist sorten-, temperatur- und witterungsabhängig. Sie kann, blassgelb, bis rötlich-orangegelb und grün in Erscheinung treten auch durch enthaltene Carotinoide. Auf diese Außenschicht der Epidermis (Exokarp) der Zitrusfrucht folgt in der Fruchtschale ein auch carotinoidhaltiges Gewebe, das Flavedo. Es enthält zahlreiche Drüsen, die artspezifische ätherische Öle in den Poren enthalten. Die nächste Schicht darunter ist eine weiße Gewebeschicht, das erwähnte Mesokarp. Darin enthalten, ist Pektin, eine der Gerüstsubstanzen in den Zellwänden der Zitrusfrüchte. Der Mesokarp-Teil der Zitrusfrucht (Albedo), besteht aus einem bei der Reife relativ trockenen, faserigen Schwammgewebe. Angrenzend folgt der für den Verzehr interessante Teil, das Fruchtfleisch, das Endokarp, mit seinen Saftschläuchen.

Dieser Teil besteht aus mit Saft gefüllten, dünnen Häuten. Die zum Beispiel fünf bis zwölf miteinander verwachsenden Fruchtblätter bilden eine entsprechende angeordnete Anzahl an Fruchtfächern, in der sich viele, von feinen Häutchen ummantelte Saftschläuche befinden. Während die Zitrusfrucht wächst, stülpen sich zum Fruchtknoten hin zahlreiche Saftschläuche aus der dünnen Haut der Fruchtfächer des Endokarps in die Hohlräume ein. Diese mit Fruchtsaft gefüllten Saftschläuche liegen eng aneinander gereiht und umschließen dabei die Samenanlagen der Zitrusfrucht. Die Fruchtfächer wiederum werden durch ein dünnes Mesokarpgewebe getrennt, an dem 10 sich die Fruchtsegmente voneinander auch leicht losen lassen. Abhängig von Fruchtart und Sorte ist das Mengenverhältnis zwischen Mesokarp und Endokarp unterschiedlich. Noch weiter zur Mitte befindet sich die zentrale Columella, der Mittelpunkt der Zitrusfrucht. An diesem Punkt verlaufen vom Fruchtstiel kommende Leitbündel, welche die Samen mit Nährstoffen und Wasser versorgen. Zu den Zitrusfrüchten gehören zum Beispiel Pomelo, Grapefruit, Orange, Apfelsine, Limette, Clementine, Zitrone, aber auch andere zum Beispiel durch Züchtung abweichende Arten. Eine bevorzugte Schale einer Nicht-Zitrusfrucht für das erfindungsgemäße Verfahren ist die Durian.

Material für dekorative Oberflächen ist zumeist wertvoll und teuer und zumeist, wenngleich in oftmals jahrhundertelanger Tradition, aufwändig zu verarbeiten: Leder und Furnier seien nur als zwei Beispiele genannt. Beide sind als natürliche Werkstoffe und auch wegen ihres als angenehm wahrgenommenen Geruchs äußerst attraktiv und positiv konnotiert.

Im Stand der Technik beschreiben CN101736657A und CN102133967A die Verwendung ganzer Zitrusfruchtschalen zu einem Werkstoff -letztere konkreter zur Herstellung eines Verpackungsmaterials durch Mischen von getrockneten und zerkleinerten Orangenschalen mit einem Klebstoff und anschließende Warmumformung in einer Form.

Insbesondere ist aus der o.g. Schrift CN102133967A bekannt, ganze Zitrusfruchtschalen zum Herstellen eines schwammartigen, elastischen Verpackungsmaterial mit polsternden Eigenschaften etwa für Eierkartons zu verwenden.

Der vorliegenden Erfindung liegt die Aufgabe zu Grunde, ein Verfahren zum Herstellen von Flachmaterial aus einem natürlichen Rohstoff zu schaffen, das einfach und preiswert ist und dessen Produkt edel dekorativ ist.

Diese Aufgabe wird von einem Verfahren mit den Merkmalen des Anspruchs 1 gelöst. Bevorzugte Ausgestaltungen sind in den Unteransprüchen angegeben.

Erfindungsgemäß wird ein Flachmaterial aus Schalen der Zitrusfrucht (oder anderer Fruchtschale mit Mesokarp wie zum Beispiel Durian) gewonnen.

Zitrusfruchtschalen werden nach dem Pressen von Säften zumeist tonnenweise entsorgt und lassen sich durch das erfindungsgemäße Verfahren zu einem hochwertigen Produkt verarbeiten.

Erfindungsgemäß ist ein Verfahren zum Herstellen von Flachmaterial mit mindestens den Schritten:
a. Zerkleinern von Mesokarp, und zwar seines weißen, schwammartigen Bestandteils, wobei kein Exokarp verarbeitet wird,
b. dessen mechanisches Ausformen zu einer nicht notwendigerweise ebenen Fläche,
c. Trocknen der Fläche.

Für das erfindungsgemäße Verfahren stellt das Mesokarp den Hauptbestandteil zur Herstellung des Flachmaterials dar. Möglicherweise wird jedoch auch Endokarp hinzugegeben, zum Beispiel je nachdem wie stark das Material später "Maserung" zum Beispiel in Form von Fasern enthalten soll. In seiner Grundstruktur liegt das Mesokarp wie ein Netz oder wie ein Skelett in der Frucht und dient sowohl der Stabilisation, als auch der Aufteilung der Frucht in seine verschiedenen Bestandteile. Es besteht aus einem zelluloseartigen Schwammgewebe und Fasern, die das Gewebe durchdringen. Wegen seiner Poren ist das Mesokarp ein leichtes Material. Der Stoff hat die Wirkung eines Schutzmantels, der äußere Einflüsse wie zum Beispiel Druck abpolstert und Bakterien zurückhält. So bildet es eine dicke Schutzbarriere zwischen der äußeren Schale und dem Fruchtinnern.

Getränkt in Wasser (oder anderer Flüssigkeit) verhält sich das Mesokarp in seiner biologischen Grundform im nassen Zustand wie ein elastischer Schwamm. Es speichert das Wasser in seinen Poren. Drückt man das Mesokarp zusammen, fließt das Wasser wieder hinaus und das Mesokarp geht bei dem Loslassen wieder in seine Ausgangsposition zurück. Im trockenen Zustand dagegen ist das Mesokarp hart etwa wie Styropor.

Bei Tageslicht und insbesondere direktem Sonnenlicht verändert das Mesokarp seine Farbe nicht, bleicht insbesondere kaum aus. Erst nach längerer Zeit kann eine geringe Veränderung der Farbe auftreten. Im Licht reflektiert das Mesokarp die Strahlen nicht, sondern bleibt in seiner Färbung matt und ohne Glanz. Zudem zeigt sich das Mesokarp lichtundurchlässig. Auch nach langem Liegen verändert sich das Mesokarp, außer einem Schwinden oder Schrumpfen wegen der austrocknenden Feuchtigkeit, nicht weiter.

Wenn Mesokarp einfriert, bilden sich feine Eiskristalle an der Oberfläche des Mesokarpgewebes sowie auch in seinen Poren. Wird das Material wieder aufgetaut, bleibt es unverändert.

Im ersten erfindungsgemäßen Schritt können die Früchte, insbesondere Zitrusfrüchte, zum Beispiel in der Fruchtsaftproduktion aufgeschnitten und das Fruchtwasser herausgepresst werden. Aus den übriggebliebenen Schalen kann nun das Mesokarp und (zum Beispiel für ein faseriges Bild nach Art einer Maserung beim schließlich hergestellten Flachmaterial) möglicherweise auch Endokarp (Fruchtkammern) herausgetrennt werden. Diese Bestandteile werden erfindungsgemäß zerkleinert. Sie können dann, auch auf hoher Hitze, gekocht werden, bis das Mesokarp "gar" ist, d.h. das Weiße des Mesokarp einen weichen und von (eigener oder zugesetzter) Flüssigkeit durchtränkten Zustand annimmt. Dieses Zwischenprodukt kann dann abgetropft und anschließend zum Beispiel in einem "Mixer", zum Beispiel mit rotierenden Messern, püriert werden. Danach wird es zum Beispiel (für ebenes Flachmaterial) auf eine glatte, ebene Arbeitsplatte 2-3 mm dick aufgestrichen. Zum Beispiel Ventilatoren sorgen dann dafür, dass die Masse gleichmäßig getrocknet wird.

Wie zuvor erwähnt, haben das Mesokarp und Endokarp in ihrer Grundform eine bestimmte Funktion, nämlich den Schutz und die Unterteilung der Zitrusfrüchte in ihrem Inneren. Das End- und Mesokarp weist dabei eine Konsistenz auf, die ich gerne während des Verarbeitungsprozesses beibehalten wollte. Bevorzugt ist es bei diesem Verfahren, eine in sich weitgehend homogene Masse des (Endokarps und) Mesokarps zu produzieren, die pastös ist: sich gut verstreichen lässt, dabei zusammenhält und nicht zu Rissbildung neigt. Dies lässt sich zum Beispiel durch den Grad der Zerkleinerung, Flüssigkeitszugabe oder Erwärmung überhaupt und Temperaturführung dabei beeinflussen.

Erfindungsgemäß ist es möglich, auf Beimischung anderer Stoffe völlig zu verzichten.

Die pastöse Masse lässt sich nur durch Zerkleinern auch ohne Kochen herstellen. Dadurch kann es aber leichter zum Reißen der Masse gekommen. Zudem ist sie dann nicht so leicht plan zu verstreichen, und nur mit relativ größerer Dicke aufzutragen. Dies kann beim Trocknen zu Formveränderungen oder Schimmel führen. Dem kann aber zum Beispiel auch durch antibakterielle Beimischungen und/oder durch hygienische Atmosphäre entgegengewirkt werden.

Die Verwendung der Außenschale der Zitrusfrüchte (Exokarp) hat sich aber insgesamt eher als nachteilig gezeigt. Es hat sich gezeigt, dass dessen körnige Konsistenz und die Öle der Außenschale auch beim Kochen und/oder Pürieren sich nur schwer mit dem faserigen Material des Mesokarp verbinden lassen. Risse können, während das Material trocknet, vermieden werden, indem die Masse auf eine möglichst homogene Konsistenz gebracht wird. Zudem lässt sich die Masse dann gut zum Trocknen auf eine Form (für ein gemäß der Formoberfläche dreidimensional gewölbtes oder irgendwie geformtes Flachmaterial) oder auf eine ebene Trocknungsfläche (für ein ebenes Flachmaterial) aufstreichen. Diese Trocknungsfläche sollte für leichtes Abformen nach dem Trocknen möglichst glatt sein. Abformungsprobleme haben sich aber bei glatter Oberfläche etwa auf Blech, emailliertem Blech, poliertem Metall, poliertem Kunststoff oder Backpapier nicht gezeigt.

Das Zwischenprodukt hat vorzugsweise nur eine geringe Abstufung der Fasern von klein, mittel bis groß. Das während des Kochens austretende Fruchtmark eignet sich hervorragend als "biologischer Klebstoff. Es verbindet sich mit dem im Material enthaltenen Wasser und kann somit während des Trocknungsprozesses die angestrebte Fläche zusammenhalten, so dass das Material keine Risse bekommt. Aufgrund dieser Vorgehensweise können die Fasern sich besser verbinden und die Masse lässt sich gut zu einer Fläche ausformen.

Es ist erfindungsgemäß möglich, die Musterung oder "Maserung", die das Flachmaterial Mesokarpmasse nach dem Trocknungsprozess aufweist, zu beeinflussen. Bei der anfänglichen Zusammenmischung kann dies zum Beispiel durch eine Veränderung des Verhältnisses von Endokarp (welches überwiegend die Fasern enthält) und Mesokarp erfolgen. Durch Auswahl der Fruchtsorte und durch den Grad der Zerkleinerung zum Beispiel lässt sich die Form und Größe der "Maserungsfasern" beeinflussen.

Nach der Trocknung bildet das Mesokarp im Flachmaterial eine weitgehend blickdichte aber transluzente Masse, die gegebenenfalls aufgrund des Endokarpanteils mit Fasern durchsetzt ist. Der vorherige weiße, schwammartige, stumpf erscheinende Teil des Mesokarps erscheint jetzt als eine gebundene Matrix (im Erscheinungsbild etwa wie getrockneter Honig), die die Fasern umgibt. Das Produkt ist elastisch. Die Oberfläche ist glatt, lässt sich schleifen und/oder polieren und/oder lackieren. Das fertige Material fühlt sich organisch an und ist wärmeleitend. Schon die Masse vor dem Trocknen kann durch Zusätze unterschiedlich gefärbt werden. Vorzugsweise können Farben wie schwarz, dunkelbraun, rötlich, orange, beige oder weiß durch gezielte Einstellung von Umgebungstemperatur und -feuchtigkeit (zum Beispiel Zufuhr von Wasserdampf) bei der Trocknung erreicht werden. Bei größerer Hitze verändert sich Farbe ins dunklere. Fast reines Weiß etwa entsteht durch Trocknung ohne zusätzliche Wärme bei Raumtemperatur und gewöhnlicher Luftfeuchtigkeit.

Insbesondere an Stellen an der das getrocknete Flachmaterial eine geringe Dicke aufweist (oder wenn das Flachmaterial insgesamt gleichmäßig wenig dick ist wie zum Beispiel nur 1 mm bis 3 mm), ist es möglich, dass Licht durchdringt - das Material ist transparent oder transluzent. Die erfindungsgemäß möglichen zum Beispiel weißen Fasern insbesondere des Endokarp bleiben aber wie ursprünglich blickdicht und zeichnen aufgrund ihrer zufälligen Verteilung ein Muster, die "Maserung", in das erfindungsgemäße Flachmaterial. Je nach Oberflächenstruktur (zum Beispiel poliert oder geschliffen) am Ende des Herstellungsprozesses kann das Flachmaterial im getrockneten Zustand eine matte oder aber auch eine Licht reflektierende Oberfläche besitzen, auch eine mit matt-diffusem Glanz. Dabei ist entscheidend, wie glatt die Oberfläche ist. Die Glätte bzw. Reflektionsfähigkeit des Materials lässt sich aber nicht nur nachträglich etwa mit einem Schleif- oder Poliergerät beeinflussen, sondern auch durch die Glätte der Formfläche oder des Presswerkzeugs
Besonders vorteilhaft und als nach der Trocknung auch später noch anschließender Schritt möglich ist mechanisches Verformen und/oder Pressen insbesondere unter vorheriger Einwirkung von Wasserdampf, also Erwärmung im entsprechenden Temperaturbereich und Durchfeuchtung. Insbesondere mit Wärme und Druck in einem Presswerkzeug kann das Flachmaterial auch nachträglich zwei- oder dreidimensional verformt, gewölbt, gestaucht werden.

Aber auch das eigentliche erfindungsgemäße Ausformen und Trocknen des Flachmaterials kann nicht nur als ebenes oder einfach gekrümmtes Flachmaterial erfolgen, sondern in beliebiger dreidimensionaler Topografie zum Beispiel in einem Presswerkzeug entsprechender Negativform.

Ein solches Presswerkzeug kann zweiteilig aufgebaut sein oder mehrteilig etwa für Formteile, bei denen auch Druck von der Seite benötigt wird.

Das Flachmaterial kann aber auch in einer "Vakuumpresse" durch Unterdruck an seine Formfläche angesaugt werden.

Erwärmungs- oder Temperiervorrichtungen können dabei die Trocknung beschleunigen und (wie oben beschreiben) die Färbung beeinflussen.

Durch die Einlagerung oder Beimischung von wasserabstoßenden Stoffen wie Ölen oder Wachsen kann Feuchtigkeit vom den Fasern ferngehalten werden (Hydrophobierung). Dies kann auch eine Imprägnierung auch etwa gegen unerwünschte organische Prozesse ermöglichen.

## Patentansprüche

1. Verfahren zum Herstellen von Flachmaterial mit den Schritten:
a. Zerkleinern von Mesokarp, und zwar seines weißen, schwammartigen Bestandteils, wobei kein Exokarp verarbeitet wird,
b. dessen mechanisches Ausformen zu einer nicht notwendigerweise ebenen Fläche,
c. Trocknen der Fläche.

2. Verfahren nach Anspruch 1, wobei in Schritt a püriert und/oder Flüssigkeit hinzugegeben und/oder gekocht wird.

3. Verfahren nach einem der vorhergehenden Ansprüche, wobei in Schritt a eine weitgehend homogene, pastöse Masse produziert wird.

4. Verfahren nach einem der vorhergehenden Ansprüche, wobei in Schritt b mit einem Spatel auf einer Formfläche ausgeformt und/oder mit einer Walze auf einer Formfläche ausgewalzt und/oder mit einer Presse auf einer Formfläche mit einer komplementär geformten Pressfläche gepresst wird.

5. Verfahren nach einem der vorhergehenden Ansprüche, wobei in Schritt a auch Endokarp und/oder Pulpa verarbeitet wird.

6. Verfahren nach einem der vorhergehenden Ansprüche, wobei nach Schritt c die Fläche klar lackiert wird (Schritt d).

7. Verfahren nach dem vorhergehenden Anspruch, wobei Schritt d wiederholt in mehreren Schichten erfolgt.

## Claims

1. Method for producing a flat material, comprising the steps:
a. grinding mesocarp, namely its spongy white component, wherein no exocarp is processed,
b. mechanical shaping thereof to form a surface that is not necessarily flat,
c. drying the surface.

2. Method according to claim 1, wherein a puree is produced and/or liquid is added and/or cooked in step a.

3. Method according to any one of the preceding claims, wherein a largely homogeneous pasty material is produced in step a.

4. Method according to any one of the preceding claims, wherein in step b, a spatula is used to shape a mold surface and/or a roller is used to perform rolling on a mold surface and/or a press is used to perform pressing on a mold surface with a complementarily shaped pressing surface.

5. Method according to any one of the preceding claims, wherein in step a, endocarp and/or pulp are processed as well.

6. Method according to any one of the preceding claims, wherein after step c, the surface is colorlessly lacquered (step d).

7. Method according to the preceding claim, wherein step d is carried out repeatedly in multiple layers.

## Revendications

1. Procédé de production d'un matériau plat, avec les étapes :
a. de broyage du mésocarpe, à savoir son constituant blanc spongieux, dans lequel aucun exocarpe n'est traité,
b. de moulage mécanique de celui-ci en une surface non nécessairement plane,
c. de séchage de la surface.

2. Procédé selon la revendication 1, dans lequel une purée et/ou du liquide sont ajoutés et/ou cuits à l'étape a.

3. Procédé selon l'une quelconque des revendications précédentes, dans lequel une masse largement homogène pâteuse est produite à l'étape a.

4. Procédé selon l'une quelconque des revendications précédentes, dans lequel à l'étape b, une spatule permet de réaliser un moulage sur une surface de façonnage et/ou un cylindre permet de réaliser un laminage sur une surface de façonnage et/ou une presse permet de réaliser un pressage sur une surface de façonnage avec une surface de pressage formée de manière complémentaire.

5. Procédé selon l'une quelconque des revendications précédentes, dans lequel à l'étape a, l'endocarpe et/ou la pulpe sont également traités.

6. Procédé selon l'une quelconque des revendications précédentes, dans lequel après l'étape c, la surface est laquée de manière incolore (étape d).

7. Procédé selon la revendication précédente, dans lequel l'étape d est effectuée à nouveau dans plusieurs couches.
